# EUROPÄISCHE PATENTSCHRIFT

(11) **EP 3 649 431 B1**
(45) Veröffentlichungstag und Bekanntmachung des Hinweises auf die Patenterteilung: **12.01.2022**
(21) Anmeldenummer: 18742697.8
(22) Anmeldetag: 28.06.2018
(51) Int. Cl.: G01B 11/25

(54) **VERFAHREN UND VORRICHTUNG ZUM DREIDIMENSIONALEN ERFASSEN EINER DREIDIMENSIONALEN OBERFLÄCHE EINES WERKSTÜCKS**
METHOD AND APPARATUS FOR THREE-DIMENSIONAL CAPTURE OF A THREE-DIMENSIONAL SURFACE OF A WORKPIECE
PROCÉDÉ ET DISPOSITIF DE DÉTECTION TRIDIMENSIONNELLE D'UNE SURFACE TRIDIMENSIONNELLE D'UNE PIÈCE

(30) Priorität: 04.07.2017 DE 102017114873
(43) Veröffentlichungstag der Anmeldung: 13.05.2020
(73) Patentinhaber: Schenck RoTec GmbH, 64293 Darmstadt (DE)
(72) Erfinder: ROGALLA, Martin, 64297 Darmstadt (DE)
(74) Vertreter: Haarpatent Patentanwälte Krämer Meyer
(86) Internationale Anmeldenummer: PCT/DE2018/100597
(87) Internationale Veröffentlichungsnummer: WO 2019/007460

(56) Entgegenhaltungen:
- DE-A1-102011 000 304
- DE-A1-102013 100 899

## Beschreibung

Die Erfindung betrifft ein Verfahren zum dreidimensionalen Erfassen einer dreidimensionalen Oberfläche eines um eine Drehachse drehbaren Werkstücks, das an entgegengesetzten Enden koaxiale Lagerflächen hat, und eine Vorrichtung zur Durchführung des Verfahrens.

Bei einem aus DE 10 2013 100 899 A1 bekannten Verfahren werden zum Bestimmen der Bearbeitungsachse eines drehbaren Werkstückrohlings ein Referenzwerkstück und anschließend der Werkstückrohling in Lagerelementen einer Messvorrichtung aufgenommen und gespannt. Während die Werkstücke durch einen Antrieb der Messvorrichtung um ihre Lagerachse gedreht werden, werden mit einer nach dem Laserlichtschnittverfahren arbeitenden, optischen Sensoreinrichtung, die in einer Geradführung an dem jeweiligen Werkstück entlang bewegt wird, Oberflächenbereiche des Referenzwerkstücks und des Werkstückrohlings gemessen. Die gemessenen dreidimensionalen Positionsdaten der Oberflächenbereiche des Referenzwerkstücks und des Werkstückrohlings werden von einem Rechner als Referenzteiloberfläche und als Rohteiloberfläche in einem Datenspeicher gespeichert. Die beiden gespeicherten Oberflächen werden miteinander verglichen und aus dabei ermittelten Abweichungen werden eine Unwuchtwirkung und daraus die Lage der Hauptträgheitsachse und der Bearbeitungsachse des Werkstückrohlings berechnet.

Der Erfindung liegt die Aufgabe zugrunde, ein neues Verfahren zum dreidimensionalen Erfassen einer dreidimensionalen Oberfläche eines um eine Drehachse drehbaren Werkstücks bereit zu stellen, die sich durch einfache und wirtschaftliche Betriebsweise auszeichnet. Weiterhin soll eine neue Vorrichtung zur Durchführung des Verfahrens geschaffen werden, die kostengünstig hergestellt werden kann.

Die Aufgabe wird erfindungsgemäß durch ein Verfahren mit den Merkmalen des Anspruchs 1 und durch eine Vorrichtung mit den Merkmalen des Anspruchs 7 gelöst. Vorteilhafte Ausgestaltungen des Verfahrens und der Vorrichtung sind in den jeweiligen Unteransprüchen angegeben.

Nach der Erfindung umfasst das Verfahren zum dreidimensionalen Erfassen einer dreidimensionalen Oberfläche eines um eine Drehachse drehbaren Werkstücks, das an entgegengesetzten Enden koaxiale Lagerflächen hat, die Schritte:
Aufnehmen des Werkstücks an den koaxialen Lagerflächen in nach oben offenen Lagerelementen, in denen das Werkstück mit horizontal ausgerichteter Drehachse in zentrierter Lage allein durch sein eigenes Gewicht gehalten ist, Anordnen einer nach dem Laserlichtschnittverfahren arbeitenden optischen Messvorrichtung mit zwei Sensoren in einem radialen Abstand von dem Werkstück und Ausrichten der Messvorrichtung derart, dass die Laserlichtebene der Messvorrichtung auf das Werkstück gerichtet ist und parallel zur Drehachse verläuft und die Sensoren so ausgerichtet sind, dass jeder Sensor eine andere Seite einer zwischen den Sensoren liegenden, zur Drehachse radialen Ebene erfasst,

Bewegen der Messvorrichtung um das ruhende Werkstück herum und Messen der dreidimensionalen Position einer Vielzahl von Punkten der dreidimensionalen Oberfläche wenigstens eines Abschnitts des Werkstücks aus einer Mehrzahl von Stellungen, in die die Messvorrichtung bewegt wird, wobei die Bewegung der Messvorrichtung entlang einer Kreisbahn und zusätzlich entlang einer zur Kreisbahn tangentialen Bahn erfolgt.

Bei dem Verfahren nach der Erfindung bleibt das Werkstück während des Messvorgangs in Ruhe und die Messvorrichtung wird im Kreis um das ruhende Werkstück herum bewegt. Das Verfahren hat den Vorteil, dass die Einlagerung des Werkstücks in die Aufnahmen der Messvorrichtung einfach ist und auf ein drehfestes Einspannen des Werkstücks verzichtet werden kann. Die Aufnahmen der Messvorrichtung benötigen keine Spannmittel und axiale Bewegungen der Aufnahmen der Messvorrichtung sind bei der Einlagerung des Werkstücks nichts erforderlich. Das Verfahren erfordert zudem keine drehbare Lagerung der Werkstückaufnahmen und auch keine steuerbaren Drehantriebe zum Drehen des Werkstücks während des Messvorgangs. Zwar ist ein Antrieb zum Bewegen der Messvorrichtung um das Werkstück herum erforderlich, dieser ist aber im Vergleich zu den für eine drehende Aufnahme insbesondere schwerer Werkstücke erforderlichen Lagerungen und Antriebe kostengünstiger. Die ruhende Aufnahme des Werkstücks und der damit verbundene Verzicht auf Spannmittel hat weiterhin den Vorteil, dass das Einlegen des Werkstücks in die Messvorrichtung und das Entnehmen nach der Durchführung der Messung mittels üblicher Förder- und Zuführeinrichtungen erfolgen kann, die in für Serienfertigung eingerichteten Betrieben meist vorhanden sind, so dass keine Spezialvorrichtungen zur Förderung benötigt werden. Die Integration einer nach dem Verfahren arbeitenden Messvorrichtung in bestehende Fertigungsstraßen ist daher einfach.

Die Bewegung der optischen Messvorrichtung um das Werkstück herum kann nach der Erfindung kontinuierlich oder in mehreren Bewegungsschritten entlang einer Kreisbahn erfolgen. Zusätzlich zu der Bewegung entlang der Kreisbahn kann die dieser überlagerte Bewegung der Messvorrichtung entlang einer zur Kreisbahn tangentialen Bahn kontinuierlich oder in Bewegungsschritten erfolgen. Auf diese Weise können auch Hinterschnitte des Werkstücks gut erfasst und unvollständige Messungen der dreidimensionalen Oberfläche durch Abschattung einzelner Bereiche vermieden werden. Vorzugsweise erfolgt die Bewegungen der Messvorrichtung entlang der Kreisbahn und in tangentialer Richtung überlagert und so aufeinander abgestimmt, dass eine flüssige, schnelle und ruckfreie Bewegung der Messvorrichtung erfolgen kann und Erschütterungen der Sensoren vermieden werden. oder umgekehrt, wobei während beider Bewegungsschritte Positionsmessungen der Werkstückoberfläche erfolgen können.

Die Bewegung der Messvorrichtung entlang der Kreisbahn ist nach einem weiteren Vorschlag der Erfindung auf einen Zentriwinkel von maximal 380° beschränkt. Die Energiezuführung zur Messvorrichtung und die Übertragung der Messdaten an einen Rechner kann daher mittels Kabel ohne die Gefahr einer zu starken Verformung der Kabel erfolgen.

Zum Messen längerer Werkstücke ist nach dem erfindungsgemäßen Verfahren weiterhin vorgesehen, dass die Messvorrichtung abschnittsweise in Längsrichtung des Werkstücks bewegt wird, wobei in jedem axialen Abschnitt, in den die Messvorrichtung bewegt wird, bei Ruhen der axialen Bewegung eine Bewegung der Messvorrichtung um das ruhende Werkstück erfolgt. Hierbei kann vorteilhaft weiterhin vorgesehen sein, dass in aufeinander folgenden axialen Abschnitten, in die die Messvorrichtung bewegt wird, die Bewegungen der Messvorrichtung um das ruhende Werkstück gegenläufig sind. Ein ungenutztes Zurückbewegen der Messvorrichtung und dafür benötigter Zeitaufwand wird auf diese Weise vermieden. Der Messvorgang kann daher sofort nach Erreichen des nächsten axialen Abschnitts beginnen.

Eine vorteilhafte Vorrichtung zum dreidimensionalen Erfassen der dreidimensionalen Oberfläche eines um eine Drehachse drehbaren Werkstücks, das an entgegengesetzten Enden koaxiale Lagerflächen hat, umfasst nach der Erfindung ein Gestell, zwei an dem Gestell koaxial zu einer horizontal ausgerichteten Lagerachse angeordnete, nach oben offene Lagerelemente, die zur Aufnahme des Werkstücks an den koaxialen Lagerflächen in einer zur Lagerachse zentrierten Lage ausgebildet sind und in denen das Werkstück allein durch sein eigenes Gewicht in der zentrierten Lage gehalten ist, eine optische Messvorrichtung, die nach dem Laserlichtschnittverfahren arbeitet und in einem radialen Abstand von der Lagerachse an einem Halter angeordnet und so ausgerichtet ist, dass die Laserlichtebene der Messvorrichtung auf das Werkstück gerichtet ist, wobei die Messvorrichtung wenigstens zwei Sensoren hat, die so ausgerichtet sind, dass jeder Sensor eine andere Seite einer zwischen den Sensoren liegenden, zur Drehachse radialen Ebene erfasst, eine Hohlspindel, die koaxial zur Lagerachse an dem Gestell angeordnet ist, wobei die Messvorrichtung mit dem Halter an der Hohlspindel angebracht ist und durch die Hohlspindel auf einer Kreisbahn um die Lagerachse geführt ist, einen steuerbaren Drehantrieb, durch den die Hohlspindel in beiden Drehrichtungen antreibbar ist, einen steuerbaren Linearantriebs, der an der Hohlspindel angeordnet ist und die Messvorrichtung trägt und durch den die Messvorrichtung tangential zur Lagerachse bewegbar ist, eine elektrische Steuereinrichtung zur Steuerung des Drehantriebs und des Linearantriebs und einen Rechner mit Datenspeicher zur Speicherung von mittels der Messvorrichtung gemessener Positionsdaten und einer Auswerteeinrichtung zur Auswertung gemessener Positionsdaten.

Die erfindungsgemäße Vorrichtung zeichnet sich durch einen geringen Bauaufwand und dementsprechend niedrige Herstellkosten aus. Sie benötigt keine Spannvorrichtungen zum Einspannen des Werkstücks an seinen Lagerflächen und auch keine drehend angetriebenen Spindeln, die Spannvorrichtungen tragen und eine Drehung des Werkstücks während des Messvorgangs ermöglichen. Die Vorrichtung nach der Erfindung weist nur steuerbare Antriebe zum Bewegen der Messvorrichtung auf, die wegen der vergleichsweise kleinen Masse der Messvorrichtung klein und kostengünstig ausgeführt sein können. Vorzugsweise eignen sich hierzu Servoantriebe, die mit Hilfe der Steuereinrichtung definierte Stellbewegungen positionsgenau ausführen können. Ein steuerbarer Drehantrieb dreht die hohle Spindel und bewegt die Messvorrichtung auf einer Kreisbahn um die Lagerachse. Ein erster steuerbarer Linearantrieb dient zum Bewegen der hohlen Spindel und der Messvorrichtung in Richtung der Lagerachse und ein zweiter steuerbarer Linearantrieb dient zum Bewegen der Messvorrichtung tangential zur Lagerachse.

Nach einem weiteren Vorschlag der Erfindung weist die Vorrichtung wenigstens ein unabhängiges Wegmesssystem auf, das Position und Bewegungen der Messvorrichtung gegenüber dem Gestell und/oder gegenüber der Hohlspindel misst. Das Wegmesssystem kann ein Axialmesssystem zum Messen der Bewegung in Richtung der Lagerachse gegenüber dem Gestell, ein Winkelmesssystem zum Messen der Drehbewegung der Hohlspindel gegenüber dem Gestell, ein Linearmesssystem zum Messen der Tangentialbewegung der Messvorrichtung gegenüber der Hohlspindel oder ein Winkelmesssystem zum Messen der Drehwinkelstellung der Messvorrichtung gegenüber der Hohlspindel umfassen. Die unabhängigen Wegmesssysteme erhöhen die Genauigkeit der Messvorrichtung in Bezug auf das dreidimensionale Erfassen einer dreidimensionalen Oberfläche eines Werkstücks und vermeidet eine Beeinträchtigung der Messgenauigkeit, die bei Bewegungsumkehr durch Spiele in den Antrieben auftreten können.

In einer bevorzugten Ausgestaltung der Vorrichtung kann die Hohlspindel und der diese antreibende Drehantrieb an einem Ständer angeordnet sein, der auf einem ersten Schlitten befestigt ist und der mit Hilfe des Schlittens an Führungsschienen im Gestell in Richtung der Lagerachse bewegbar geführt ist. Die Lagerelemente zur Aufnahme des Werkstücks können erfindungsgemäß ebenfalls an Ständern angeordnet sein, die mit dem Gestell fest verbindbar sind, wobei die Befestigung wenigstens eines Ständers gegenüber dem Gestell in Richtung der Lagerachse verstellbar ausgebildet ist.

Für reproduzierbare Messwerte muss das in den Lagerelementen aufgenommene Werkstück in seiner Axialposition und seiner Drehwinkelposition präzise gegenüber dem Gestellt positioniert werden. Für diese Aufgabe weist die Vorrichtung eine steuerbare Ausrichtvorrichtung auf, die zum Ausrichten eines in den Lagerelementen aufgenommenen Werkstücks in einer axialen Position und einer Drehwinkelposition ausgebildet ist. Die Ausrichtvorrichtung kann vorteilhaft auf einem zweiten Schlitten angeordnet sein und mit diesem im Gestell aus einer außerhalb des Bewegungsbereichs der Messvorrichtung liegenden Ruhestellung in eine Ausrichtstellung unter der Lagerachse bewegbar sein. Sie kann weiterhin einen Ausrichtkopf aufweisen, der zum Ausrichten des Werkstücks nach oben an die Lagerachse heran bewegbar ist und pneumatisch betätigbare Greifer aufweist, durch die das Werkstück in eine definierte Ausrichtposition bewegbar ist.

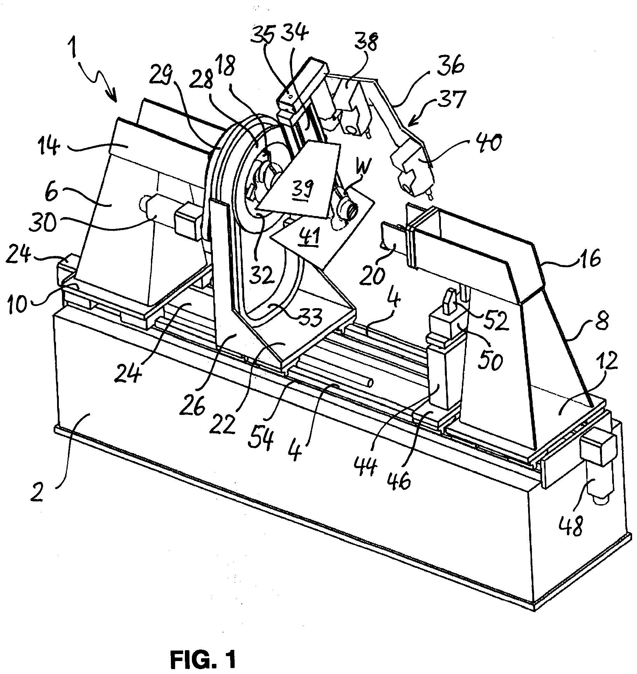

Die Erfindung wird nachfolgend anhand von Ausführungsbeispielen der Erfindung näher erläutert, die in der Zeichnung dargestellt sind. Es zeigen
- Figur 1: eine perspektivische Darstellung der Vorrichtung nach der Erfindung,

Die in Figur 1 dargestellte Vorrichtung 1 hat ein quaderförmiges Gestell 2, das auf seiner Oberseite mit sich in Längsrichtung des Gestells 2 erstreckenden Führungsschienen 4 versehen ist. Auf den entgegengesetzten Enden der Führungsschienen 4 sind in spiegelbildlicher Anordnung zwei Ständer 6, 8 angeordnet. Die Ständer 6, 8 haben jeweils eine Grundplatte 10, 12 die mit an der Unterseite angebrachten Führungselementen längsverschieblich auf den Führungsschienen 4 gelagert ist. Die Grundplatten 10, 12 der Ständer 6, 8 können auf dem Gestell 2 mittels nicht dargestellter Spannmittel festgespannt werden. Die Spannmittel wenigstens eines der Ständer 6, 8 können gelöst werden, um den Abstand zwischen den Ständern 6, 8 einstellen zu können.

Die Ständer 6, 8 haben eine sich von der Grundplatte 10, 12 nach oben verjüngende Form und sind an ihren oberen Enden mit zur Grundplatte 10, 12 parallelen Armen 14, 16 versehen, die sich zueinander erstrecken und an ihren gegenüber liegenden, freien Enden jeweils ein Lagerelement 18, 20 aufweisen. Die Lagerelemente 18, 20 haben die Form eines Halbzylinders, der nach oben offen ist und der an seiner Stirnseite mit einer ein Zentrierprisma bildenden Wand versehen ist. Infolge dieser Gestaltung können Werkstücke mit zylindrischen Lagerflächen von oben in die Lagerelemente 18, 20 eingelegt werden, wobei die zylindrischen Lagerflächen der Werkstücke durch die Lagerelemente 18, 20 unter der Wirkung des Werkstückgewichts in eine zur Lagerachse zentrierte Lage gebracht und in dieser gehalten werden.

Zwischen den Ständern 6, 8 ist auf den Führungsschienen 4 des Gestells 2 ein erster Schlitten 22 längsbeweglich gelagert. Der Schlitten 22 ist mit einem ersten steuerbaren Linearantrieb 24 verbunden, durch den er in Längsrichtung auf dem Gestell 2 bewegt werden kann. Der Schlitten 22 trägt einen Lagerständer 26, der an seinem oberen Ende eine Lageröffnung aufweist, in der eine Hohlspindel 28 koaxial zu der von den Lagerelementen 18, 20 bestimmten Lagerachse drehbar gelagert ist. Die Hohlspindel 28 ist über einen Zahnriemen 29 durch einen Drehantrieb 30 drehbar, der ebenfalls an dem Lagerständer 26 befestigt ist. Durch den Drehantrieb 30 kann die Hohlspindel 28 um einen Drehwinkel von 380° im Uhrzeigersinn oder entgegen dem Uhrzeigersinn gedreht werden.

Die Lagerelemente 18, 20 sind so an den Enden der Arme 14, 16 befestigt, dass ihre Lage in vertikaler Richtung verstellt werden kann. Auf diese Weise kann die vertikale Position der Lagerelemente an verschiedene Durchmesser der in den Lagerelementen aufgenommenen Lagerflächen der Werkstücke angepasst und erreicht werden, dass die Lagerachse im Wesentlichen koaxial zur Drehachse der Hohlspindel 28 verläuft und bei verschiedenen Werkstücken immer den gleichen Abstand vom Maschinenbett hat.

Die Hohlspindel 28 hat eine zentrale, sie vollständig durchdringende Öffnung 32, deren Innendurchmesser so groß bemessen ist, dass die Lagerelemente 18, 20, ein von diesen aufgenommenes Werkstück, beispielsweise eine Kurbelwelle, und die Arme 14, 16 ungehindert in die Öffnung 32 eindringen können. Die Hohlspindel 28 und der Lagerständer 26 können daher mit dem Schlitten 22 so nahe an den Ständer 6 heran bewegt werden, dass der Arm 14 durch die Öffnung 32 der Hohlspindel 28 hindurch ragt und das Lagerelement 18 sich auf der dem Ständer 6 abgekehrten Seite des Lagerständers 26 außerhalb der Hohlspindel 28 befindet. In dieser Stellung des Lagerständers 26 sind beide Lagerelemente 18, 20 von oben frei zugänglich, so dass ein Werkstück in die Lagerelemente 18, 20 eingelegt oder aus diesen entnommen werden kann. Die bis nahe an den Ständer 6 heran gefahrene Stellung des Lagerständers 26 ist somit zum Be- und Entladen der Vorrichtung 1 mit einem Werkstück bestimmt.

Auf der dem Ständer 8 zugewandten Seite ist an der Hohlspindel 28 ein zweiter Linearantrieb 34 mit einem tangential zur Lagerachse und in einer zur Lagerachse senkrechten Ebene bewegbaren Antriebsglied 35 angebracht, das einen Halter 36 trägt. An dem Halter 36 ist eine Messvorrichtung 37 mit zwei nach dem Laserlichtschnittverfahren arbeitende Sensoren 38, 40 befestigt. Zur Energiezuführung zum Linearantrieb 34 und zur Messvorrichtung 37 und zur Übertragung der Messdaten an einen Rechner ist an der Hohlspindel 28 ein auf diese aufwickelbarer, flexibler Kabelbaum 33 angeordnet, der mit einem Ende am Lagerständer 26 befestigt und dort an einen weiterführenden Kabelbaum angeschlossen ist.

Die Sensoren 38, 40 sind auf die Lagerachse gerichtet, wobei ihre Laserlichtebenen parallel zur Lagerachse verlaufen. Die mittigen Messachsen der Sensoren 39, 40 sind zur Lagerachse so geneigt, dass sie in einem spitzen Winkel auf eine zwischen den Sensoren 38, 40 liegende, zur Lagerachse radialen Ebene treffen, so dass jeder Sensor 38, 40 eine andere Seite einer zwischen den Sensoren 38, 40 liegenden, zur Lagerachse radialen Ebene erfassen kann. Die transparenten Flächen 39, 41 veranschaulichen die Lage der ebenen Messbereiche der Sensoren 38, 40 in der in Figur 1 gezeigten Stellung der Messvorrichtung 37. Die ebenen Messbereiche der Sensoren 38, 40 können in der gleichen Ebene oder in zwei parallelen Ebenen liegen.

Zur Erlangung reproduzierbarer Messwerte ist es notwendig, das von den Lagerelementen 18, 20 aufgenommene Werkstück in der Axial- und Winkelposition genau zu positionieren. Diese Funktion übernimmt eine steuerbare Ausrichtvorrichtung 44, die auf einem zweiten Schlitten 46 angeordnet ist und mit diesem im Gestell 2 aus einer unterhalb des Armes 16 liegenden Ruhestellung in eine Ausrichtstellung bewegbar ist, die sich unter der Lagerachse zwischen den Lagerelementen 18, 20 befindet. Zum Bewegen der Ausrichtvorrichtung 44 ist an dem Gestell 2 ein steuerbarer dritter Linearantrieb 48 angeordnet. Die Ausrichtvorrichtung 44 weist einen nach oben an ein in den Lagerelementen 18, 20 aufgenommenes Werkstück heran bewegbaren Ausrichtkopf 50 auf, der mit pneumatisch betätigbaren Greifern 52 ausgerüstet ist, durch die das Werkstück gegriffen und durch axiales Verschieben und Drehen in eine definierte Axialposition und Drehwinkelposition bewegbar ist. Nach erfolgtem Ausrichten kann der Ausrichtkopf 50 abgesenkt und die Ausrichtvorrichtung 44 in die Ruhestellung unter dem Arm 16 zurückbewegt werden. Das ausgerichtete Werkstück wird durch sein Eigengewicht und die zwischen den Lagerflächen und den Lagerelementen 18, 20 vorhandene Reibung während des Messvorgangs in der Ausrichtposition gehalten.

Für die Erzielung genauer, reproduzierbarer Messwerte ist auch eine genaue Kenntnis der Position der optischen Messvorrichtung 37 in Bezug auf das ausgerichtete Werkstück notwendig. Um dies zu erreichen, weist die Vorrichtung 1 mehrere unabhängige Wegmesssysteme auf, mit welchen die Positionen und die Wege der Messvorrichtung 37 gemessen werden können.

Hierzu befindet sich an den Führungsschienen 4 ein mit dem ersten Schlitten 22 und dem zweiten Schlitten 46 zusammenwirkendes Axialmesssystem 54, mit welchem die axialen Positionen und Wege des Lagerständers 26 und der Ausrichtvorrichtung 44 gegenüber dem Gestell 2 gemessen werden können. An dem Lagerständer 26 ist ein mit der Hohlspindel 28 zusammenwirkendes Drehwinkelmesssystem vorhanden, das zum Messen der Drehwinkelpositionen und Drehwege der Hohlspindel 28 gegenüber dem Lagerständer 26 und damit auch gegenüber dem Gestell 2 dient. Desweiteren ist an dem dritten Linearantrieb 48 ein Linearmesssystem vorhanden, das die Positionen und Wege des Halters 36 in tangentialer Richtung in Bezug auf die Hohlspindel 28 misst. Zwar verfügen die Linearantriebe 24, 34 und 48 sowie der Drehantrieb 30 über eigene Positionsmesssysteme, die zu ihrer Steuerung verwendet werden. Die nach der Erfindung vorgesehenen und von den Antrieben unabhängigen Wegmesssysteme sind aber besonders genau und werden in ihrer Messgenauigkeit nicht von Spielen oder anderen Einflüssen der Antriebe in ihrer Genauigkeit beeinträchtigt.

Die beschriebene Vorrichtung 1 ist vorzugsweise dazu bestimmt, die dreidimensionale Oberfläche eines um eine Drehachse drehenden Werkstücks, insbesondere einer Kurbelwelle, dreidimensional zu erfassen, um beispielsweise aus den erfassten Messwerten eine Bearbeitungsachse zur Bearbeitung des Werkstücks errechnen zu können, bei der das Werkstück nach der Bearbeitung eine möglichst geringe Unwucht aufweist. Zur Durchführung der Messungen wird das zu vermessene Werkstück so in die Vorrichtung 1 eingelegt, dass das Werkstück mit den koaxialen Lagerflächen an seinen beiden Enden von den Lagerelementen 18, 20 aufgenommen und in eine zur Lagerachse der Lagerelemente 18, 20 zentrierte Lage gebracht wird. Der Lagerständer 26 ist für diesen Vorgang näher als in Figur 1 gezeigt an den Ständer 6 herangefahren und die Messvorrichtung 37 so positioniert, so dass das Einlegen des Werkstücks in die Lagerelemente 18, 20 durch die Hohlspindel 28 und die Messvorrichtung 37 nicht behindert wird.

Das in den Lagerelementen 18, 20 aufgenommene, in Figur 1 nur teilweise dargestellte Werkstück W wird anschließend mittels der Ausrichtvorrichtung 44 in seiner axialen Lage und in seiner Drehwinkelstellung genau positioniert. Hierzu wird die Ausrichtvorrichtung 44 durch den Linearantrieb 48 unter das Werkstück gefahren. Danach wird der Ausrichtkopf angehoben und das Werkstück mit Hilfe der pneumatischen Greifer 52 in eine bestimmte Drehwinkelstellung und Axialposition gebracht, in der es durch sein Eigengewicht reibschlüssig gehalten ist. Die Ausrichtvorrichtung 44 kehrt danach in ihre Ruhestellung unter dem Arm 16 an dem Ständer 8 zurück.

Zum Messen der dreidimensionalen Oberfläche des Werkstücks wird im nächsten Schritt die Messvorrichtung 37 in eine für den Beginn der Messung geeignete Anfangsstellung gebracht. In der Anfangsstellung kann der Lagerständer 26 an den Ständer 6 herangefahren sein, wenn in dieser Stellung des Lagerständers 26 die Sensoren 38, 40 der Messvorrichtung 37 aufgrund einer ausladenden Form des Halters 36 mit ihren Messbereichen bereits einen Endabschnitt des Werkstücks erfassen können. Ist dies nicht der Fall, so muss der Lagerständer 26 zum Erreichen der Anfangsstellung aus seiner Ruhestellung am Ständer 6 zunächst näher an das Werkstück heran bewegt werden. Zur Anfangsstellung gehört weiterhin eine bestimmte Drehwinkelstellung der Hohlspindel 28, die vorzugsweise so gewählt wird, dass aus dieser Stellung eine volle Umdrehung der Hohlspindel 28 in einer Drehrichtung ausführbar ist.

Desweiteren wird in der Anfangsstellung eine bestimmte tangentiale Stellung des Antriebsglieds 35 des zweiten Linearantriebs 34 eingestellt. Dies kann beispielsweise eine Stellung des Antriebsglieds 35 sein, bei der die Lichtschnittebenen der Sensoren 38, 40 sich in einem Abstand von der Lagerachse befinden.

Ausgehend von diesen Anfangsstellungen wird dann bei aktiver Messvorrichtung 37 die Hohlspindel 28 im Uhrzeigersinn gedreht. Die Drehbewegung kann gleichförmig sein oder eine variierende Drehgeschwindigkeit haben. Gleichzeitig mit der Einleitung der Drehbewegung oder auch zeitversetzt dazu wird durch Aktivierung des Linearantriebs 34 die Messvorrichtung 37 in einer ersten Richtung tangential bewegt, so dass sich beide Bewegungen überlagern, während Messwerte erfasst werden. Nach einer Drehung der Hohlspindel 28 von beispielsweise etwa 90° erreicht die tangentiale Bewegung des Linearantriebs 34 ein Ende und der Linearantrieb 34 wird umgesteuert und ruckfrei in entgegengesetzter Richtung zurückbewegt, während die Hohlspindel in gleicher Richtung weitergedreht wird. Nach Drehung der Hohlspindel 28 um beispielsweise 270° kann der Linearantrieb 34 nochmal umgesteuert und wieder tangential in die der ersten Richtung bewegt werden, wobei er seine Anfangstellung erreicht, wenn die Hohlspindel 28 eine volle Umdrehung ausgeführt hat. Die Messvorrichtung 37 wurde bei dem beschriebenen Vorgang einmal um das Werkstück herumbewegt, wobei der von den Sensoren 38, 40 der Messvorrichtung 37 erfasste Abschnitt des Werkstücks infolge der gleichzeitig stattfindenden tangentialen Verschiebung der Messvorrichtung 37 aus vielen verschiedenen Blickrichtungen erfasst worden ist und die dabei gewonnenen Messwerte die Berechnung eines vollständigen dreidimensionalen Modells des erfassten Werkstückabschnitts ermöglichen.

Sind Werkstücke länger als der in einem Umlauf der Messvorrichtung zu erfassende Abschnitt, so wird zur Erfassung des nächsten, danebenliegenden Abschnitts des Werkstücks durch Ansteuerung des Linearantriebs 24 der Lagerständer 26 um einen entsprechenden Betrag in Richtung des Ständers 8 verschoben. Die Hohlspindel 28 und der Linearantrieb 34 verbleiben bei diesem Vorgang in der am Ende des vorherigen Messlaufs erreichten Stellung, die dann für den nächsten Messlauf mit axial verschobenem Lagerständer 26 die Anfangsstellung bilden. Danach wird in der zuvor beschriebenen Weise die Hohlspindel 28 entgegen dem Uhrzeigersinn gedreht und die Messvorrichtung 37 dabei in wechselnder Richtung tangential bewegt. Am Ende dieses zweiten Messlaufs befinden sich die Hohlspindel 28 und der Linearantrieb 34 wieder in der vor dem ersten Messlauf eingenommenen Anfangsstellung.

Je nach Länge des Werkstücks können auf die beschriebenen Messläufe noch weitere Messläufe mit noch weiter axial verschobenem Lagerständer 26 erfolgen.

Die beschriebene Ausführung eines Messlaufs ist nur eine von mehreren verschiedenen, mit der Vorrichtung nach der Erfindung vorteilhaft durchführbaren Möglichkeiten. Ist die dreidimensionale Gestalt des Werkstücks mit radial zur Lagerachse ausgerichteter Blickrichtung vollständig zu erfassen, so kann auf tangentiale Verschiebungen der Messvorrichtung verzichtet werden und die Messung in einem kontinuierlichen Umlauf der Messvorrichtung um das Werkstück herum durchgeführt werden. Weiterhin kann es sein, dass nur auf einer oder zwei Seiten des Werkstücks die exakte Erfassung eine tangentiale Verlagerung der Messvorrichtung erfordert, so dass entsprechend nur dann, wenn die Messvorrichtung bei ihrem Umlauf diesen Seiten zugewandt ist, eine ergänzende Erfassung mit tangentialer Verschiebung der Messvorrichtung erfolgt. In anderen Fällen kann es auch vorteilhaft sein, wenn gleichzeitig während eines kontinuierlichen Umlaufs der Messvorrichtung die Messvorrichtung zusätzlich einmal oder mehrfach tangential hin und her bewegt wird, die Drehbewegung und die Tangentialbewegung der Messvorrichtung sich also überlagern. Auch eine definierte Verknüpfung von Drehbewegung und Tangentialbewegung kann hierbei vorteilhaft sein. Einer geringeren Zahl an erreichbaren Messwerten steht hierbei der Zeitgewinn für einen ununterbrochenen, kontinuierlichen Messlauf gegenüber.

## Patentansprüche

1. Verfahren zum dreidimensionalen Erfassen einer dreidimensionalen Oberfläche eines um eine Drehachse drehbaren Werkstücks, das an entgegengesetzten Enden koaxiale Lagerflächen hat, umfassend die Schritte:
Aufnehmen des Werkstücks an den koaxialen Lagerflächen in nach oben offenen Lagerelementen (18, 20), in denen das Werkstück mit horizontal ausgerichteter Drehachse in zentrierter Lage allein durch sein eigenes
Gewicht gehalten ist, **gekennzeichnet durch** die weiteren Schritte:
Anordnen einer nach dem Laserlichtschnittverfahren arbeitenden optischen Messvorrichtung (37) mit zwei Sensoren (38, 40) in einem radialen Abstand von dem Werkstück und Ausrichten der Messvorrichtung (37) derart, dass die Laserlichtebene der Messvorrichtung (37) auf das Werkstück gerichtet ist und
die Sensoren (18, 20) so ausgerichtet sind, dass jeder Sensor (18, 20) eine andere Seite einer zwischen den Sensoren liegenden, zur Drehachse radialen Ebene erfasst,
Bewegen der Messvorrichtung (37) um das ruhende Werkstück herum und Messen der dreidimensionalen Position einer Vielzahl von Punkten der dreidimensionalen Oberfläche wenigstens eines Abschnitts des Werkstücks aus einer Mehrzahl von Stellungen, in die die Messvorrichtung (37) bewegt wird, wobei die Bewegung der Messvorrichtung (37) entlang einer Kreisbahn und zusätzlich entlang einer zur Kreisbahn tangentialen Bahn erfolgt.

2. Verfahren nach Anspruch 1, **dadurch gekennzeichnet, dass** die Laserlichtebene der Messvorrichtung (37) parallel zur Drehachse verläuft.

3. Verfahren nach einem der vorhergehenden Ansprüche, **dadurch gekennzeichnet, dass** die Bewegung der Messvorrichtung (37) entlang der Kreisbahn auf einen Zentriwinkel von maximal 380° beschränkt ist.

4. Verfahren nach einem der vorhergehenden Ansprüche, **dadurch gekennzeichnet, dass** die Messvorrichtung (37) abschnittsweise in Längsrichtung des Werkstücks bewegt wird, wobei in jedem Abschnitt der Bewegung in Längsrichtung eine Bewegung der Messvorrichtung (37) um das ruhende Werkstück erfolgt.

5. Verfahren nach Anspruch 4, **dadurch gekennzeichnet, dass** die Bewegungen der Messvorrichtung um das ruhende Werkstück in aufeinander folgenden Abschnitten der Bewegung in Längsrichtung gegenläufig erfolgen.

6. Verfahren nach einem der vorhergehenden Ansprüche, **dadurch gekennzeichnet, dass** ein in den Lagerelementen (18, 20) aufgenommenes Werkstück vor dem dreidimensionalen Erfassen seiner dreidimensionalen Oberfläche durch eine steuerbare Ausrichtvorrichtung (44) in eine definierte axiale Position und in eine definierte Drehwinkelposition ausgerichtet wird.

7. Vorrichtung (1) zum dreidimensionalen Erfassen einer dreidimensionalen Oberfläche eines um eine Drehachse drehbaren Werkstücks, das an entgegengesetzten Enden koaxiale Lagerflächen hat, umfassend ein Gestell (2),
zwei an dem Gestell (2) koaxial zu einer horizontal ausgerichteten Lagerachse angeordnete, nach oben offene Lagerelemente (18, 20), die zur Aufnahme des Werkstücks an den koaxialen Lagerflächen in einer zur Lagerachse zentrierten Lage ausgebildet sind und in denen das Werkstück allein durch sein eigenes Gewicht in der zentrierten Lage gehalten ist,
**gekennzeichnet durch**
eine optische Messvorrichtung (37), die nach dem Laserlichtschnittverfahren arbeitet und in einem radialen Abstand von der Lagerachse an einem Halter (36) angeordnet und so ausgerichtet ist, dass die Laserlichtebene der Messvorrichtung (37) auf das Werkstück gerichtet ist, wobei die Messvorrichtung (37) wenigstens zwei Sensoren (38, 40) hat, die so ausgerichtet sind, dass jeder Sensor (38, 40) eine andere Seite einer zwischen den Sensoren (38, 40) liegenden, zur Lagerachse radialen Ebene erfasst,
eine Hohlspindel (28), die koaxial zur Lagerachse an dem Gestell (2) angeordnet ist, wobei die Messvorrichtung (37) mit dem Halter (36) an der Hohlspindel (28) angebracht ist und durch die Hohlspindel (28) auf einer Kreisbahn um die Lagerachse geführt ist,
einen steuerbaren Drehabtrieb (30), durch den die Hohlspindel (28) in beiden Drehrichtungen antreibbar ist,
einen steuerbaren Linearantriebs (34), der an der Hohlspindel (28) angeordnet ist und die Messvorrichtung (37) trägt und durch den die Messvorrichtung (37) tangential zur Lagerachse bewegbar ist,
eine elektrische Steuereinrichtung zur Steuerung des Drehantriebs (30) und des Linearantriebs (34) und
einen Rechner mit einem Datenspeicher und einer Auswerteeinrichtung zur Speicherung und Auswertung von mittels der Messvorrichtung gemessener Positionsdaten.

8. Vorrichtung nach Anspruch 7, **dadurch gekennzeichnet, dass** die Hohlspindel (28), der Halter (36) und die Messvorrichtung (37) gemeinsam durch einen weiteren steuerbaren Linearantrieb (24) in Richtung der Lagerachse gegenüber dem Gestell (2) bewegbar sind.

9. Vorrichtung nach einem der Ansprüche 7 oder 8, **gekennzeichnet durch** unabhängige Wegmesssyteme, die zum Messen von Positionen und/oder Wegen der Messvorrichtung (37) gegenüber dem Gestell (2) eingerichtet sind.

10. Vorrichtung nach einem der Ansprüche 7 bis 9, **dadurch gekennzeichnet, dass** die Hohlspindel (28) und der diese antreibende Drehantrieb (30) an einem Lagerständer (26) angeordnet sind, der auf einem ersten Schlitten (22) befestigt ist und mit Hilfe des Schlittens (22) an Führungsschienen (4) im Gestell (2) in Richtung der Lagerachse bewegbar geführt ist.

11. Vorrichtung nach einem der Ansprüche 7 bis 10, **gekennzeichnet, durch** eine steuerbare Ausrichtvorrichtung (44), die zum Ausrichten eines in den Lagerelementen (18, 20) aufgenommenen Werkstücks in einer axialen Position und in einer Winkelposition ausgebildet ist.

12. Vorrichtung nach Anspruch 11, **dadurch gekennzeichnet, dass** die Ausrichtvorrichtung (44) auf einem zweiten Schlitten (46) angeordnet ist und mit diesem im Gestell (2) aus einer außerhalb des Bewegungsbereichs der Messvorrichtung (37) liegenden Ruhestellung in eine Ausrichtstellung unter der Lagerachse bewegbar ist.

13. Vorrichtung nach einem der Ansprüche 11 oder 12, **dadurch gekennzeichnet, dass** die Ausrichtvorrichtung (44) einen Ausrichtkopf (50) aufweist, der zum Ausrichten des Werkstücks nach oben an die Lagerachse heran bewegbar ist und der pneumatisch betätigbare Greifer (52) zum ergreifen des Werkstücks aufweist.

14. Vorrichtung nach einem der Ansprüche 11 bis 13, **dadurch gekennzeichnet, dass** zum Bewegen der Ausrichtvorrichtung (44) von der Ruhestellung in eine Ausrichtstellung ein steuerbarer dritter Linearantrieb (48) an dem Gestell (2) angeordnet ist.

## Claims

1. Method for three-dimensionally capturing a three-dimensional surface of a workpiece rotatable about an axis of rotation, which has coaxial bearing surfaces at opposite ends, comprising the steps of:
Receiving the workpiece on the coaxial bearing surfaces in upwardly open bearing elements (18, 20), in which the workpiece is held with a horizontally aligned axis of rotation in a centred position purely by its own weight,
**characterised by** the further steps
Arranging an optical measurement apparatus (37) operating according to the laser light section method with two sensors (38, 40) at a radial distance from the workpiece and aligning the measurement apparatus (37) such that the laser light plane of the measurement apparatus (37) is directed onto the workpiece and the sensors (18, 20) are aligned so that each sensor (18, 20) captures a different side of the plane that lies between the sensors and that is radial to the axis of rotation,
Moving the measurement apparatus (37) about the resting workpiece and measuring the three-dimensional position of a multiplicity of points of the three-dimensional surface of at least a portion of the workpiece from a plurality of positions into which the measurement apparatus (37) is moved, wherein the movement of the measurement apparatus (37) takes place along a circular trajectory and additionally along a trajectory tangential to the circular path.

2. Method according to claim 1, **characterised in that** the laser light plane of the measurement apparatus (37) is parallel to the axis of rotation.

3. Method according to one of the preceding claims, **characterised in that** the movement of the measurement apparatus (37) along the circular trajectory is limited to a central angle of at most 380°.

4. Method according to one of the preceding claims, **characterised in that** the measurement apparatus (37) is moved in sections in the longitudinal direction of the workpiece, wherein in each section of the movement in the longitudinal direction, a movement of the measurement apparatus (37) takes place around the resting workpiece.

5. Method according to claim 4, **characterised in that** the movements of the measurement apparatus around the resting workpiece takes place in successive portions of the movement in the longitudinal direction in opposite directions.

6. Method according to one of the preceding claims, **characterised in that** a workpiece received in the bearing elements (18, 20) is aligned in a defined axial position and in a defined rotational angle position by a controllable alignment apparatus (44) before three-dimensionally capturing its three-dimensional surface.

7. Apparatus (1) for three-dimensionally capturing a three-dimensional surface of a workpiece rotatable about an axis of rotation, which has coaxial bearing surfaces at opposite ends, comprising
a frame (2),
two upwardly open bearing elements (18, 20) arranged on the frame (2) coaxially to a horizontally aligned bearing axis which are formed for receiving the workpiece on the coaxial bearing surfaces in a position centred on the bearing axis and in which the workpiece is kept in the centred position purely by own weight, **characterised in that**,
an optical measurement apparatus (37), which operates according to the laser light section method and is arranged at a radial distance from the bearing axis on a holder (36) and aligned so that the laser light plane of the measurement apparatus (37) is directed onto the workpiece, wherein the measurement apparatus (37) has at least two sensors (38, 40) aligned so that each sensor (38, 40) captures a different side of a plane that lies between the sensors (38, 40) and that is radial to the axis of rotation,
a hollow spindle (28) which is arranged coaxially to the bearing axis on the frame (2), wherein the measurement apparatus (37) is mounted with the holder (36) on the hollow spindle (28) and is guided through the hollow spindle (28) along a circular trajectory around the bearing axis,
a controllable rotary drive (30), by means of which the hollow spindle (28) can be driven in both directions of rotation,
a controllable linear drive (34), which is arranged on the hollow spindle (28) and carries the measurement apparatus (37) and moves the measurement apparatus (37) tangentially to the bearing axis,
an electrical control device for controlling the rotary drive (30) and the controllable linear drive (34) and
a computer with a data memory and an evaluation device for storing and evaluating position data measured by means of the measurement apparatus.

8. Apparatus according to claim 7, **characterised in that** the hollow spindle (28), the holder (36) and the measurement apparatus (37) are movable together by a further controllable linear drive (24) in the direction of the bearing axis relative to the frame (2).

9. Apparatus according to one of claims 7 or 8, **characterised by** independent path measurement systems, which are adapted to measure positions and/or paths of the measurement apparatus (37) relative to the frame (2).

10. Apparatus according to one of claims 7 to 9, **characterised in that** the hollow spindle (28) and the driving rotary drive (30) are arranged on a bearing upright (26) which is mounted on a first carriage (22) and is guided movably on guide rails (4) in the frame (2) in the direction of the bearing axis with the aid of the carriage (22).

11. Apparatus according to one of claims 7 to 10, **characterised by** a controllable alignment apparatus (44), which is designed for aligning a workpiece received in the bearing elements (18, 20) in an axial position and in an angular position.

12. Apparatus according to claim 11, **characterised in that** the alignment apparatus (44) is arranged on a second carriage (46) and is movable with this in the frame (2) from a rest position lying outside the range of movement of the measurement apparatus (37) into an alignment position under the bearing axis.

13. Apparatus according to one of claims 11 or 12, **characterised in that** the alignment apparatus (44) comprises an alignment head (50) which is movable up to the bearing axis and comprises pneumatically actuatable grippers (52) for gripping the workpiece to align the workpiece.

14. Apparatus according to one of claims 11 to 13, **characterised in that** a controllable third linear drive (48) is arranged on the frame (2) for moving the alignment apparatus (44) from the rest position to an alignment position.

## Revendications

1. Procédé de capture tridimensionnelle d'une surface tridimensionnelle d'une pièce pouvant tourner autour d'un axe de rotation et ayant des surfaces d'appui coaxiales à des extrémités opposées, comprenant les étapes consistant à :
loger la pièce sur les surfaces d'appui coaxiales dans des éléments de palier (18, 20) ouverts vers le haut et dans lesquels la pièce est maintenue par son seul poids dans une position centrée avec l'axe de rotation orienté horizontalement, **caractérisé par** les étapes suivantes consistant à :
disposer à une distance radiale de la pièce un dispositif de mesure optique (37) à deux capteurs (38, 40) fonctionnant selon le procédé de sectionnement de la lumière laser et orienter le dispositif de mesure (37) de telle sorte que le plan de lumière laser du dispositif de mesure (37) soit dirigé vers la pièce et que les capteurs (18, 20) soient orientés de telle sorte que chaque capteur (18, 20) capture un côté différent d'un plan radial à l'axe de rotation et situé entre les capteurs,
déplacer le dispositif de mesure (37) autour de la pièce immobile et mesurer la position tridimensionnelle d'une pluralité de points de la surface tridimensionnelle d'au moins une partie de la pièce à partir d'une pluralité de positions dans lesquelles le dispositif de mesure (37) est déplacé, le mouvement du dispositif de mesure (37) étant réalisé le long d'une trajectoire circulaire et de plus le long d'une trajectoire tangentielle à la trajectoire circulaire.

2. Procédé selon la revendication 1, **caractérisé en ce que** le plan de lumière laser du dispositif de mesure (37) est parallèle à l'axe de rotation.

3. Procédé selon l'une des revendications précédentes, **caractérisé en ce que** le mouvement du dispositif de mesure (37) le long de la trajectoire circulaire est limité à un angle au centre d'au plus 380°.

4. Procédé selon l'une des revendications précédentes, **caractérisé en ce que** le dispositif de mesure (37) est déplacé par tronçons dans la direction longitudinale de la pièce, un mouvement du dispositif de mesure (37) autour de la pièce immobile étant réalisé dans chaque tronçon du mouvement dans la direction longitudinale.

5. Procédé selon la revendication 4, **caractérisé en ce que** les mouvements du dispositif de mesure autour de la pièce immobile dans des tronçons successifs du mouvement dans la direction longitudinale ont lieu dans des directions opposées.

6. Procédé selon l'une des revendications précédentes, **caractérisé en ce qu'**une pièce reçue dans les éléments de palier (18, 20) est alignée dans une position axiale définie et dans une position angulaire définie par un dispositif d'alignement (44) pouvant être commandé avant la capture tridimensionnelle de sa surface tridimensionnelle.

7. Dispositif (1) pour la capture tridimensionnelle d'une surface tridimensionnelle d'une pièce pouvant tourner autour d'un axe de rotation et ayant des surfaces d'appui coaxiales à des extrémités opposées, comprenant
un bâti (2),
deux éléments de palier (18, 20) ouverts vers le haut et disposés sur le bâti (2) de façon coaxiale par rapport à un axe de palier orienté horizontalement, et qui sont conçus pour recevoir la pièce par les surfaces d'appui coaxiales dans une position centrée par rapport à l'axe de palier, et dans lesquels la pièce est maintenue dans la position centrée par son seul poids,
**caractérisé par**
un dispositif de mesure optique (37) fonctionnant selon le procédé de sectionnement de la lumière laser et disposé sur un support (36) à une distance radiale de l'axe de palier, et qui est orienté de telle sorte que le plan de lumière laser du dispositif de mesure (37) soit dirigé vers la pièce, le dispositif de mesure (37) présentant au moins deux capteurs (38, 40) qui sont orientés de telle manière que chaque capteur (38, 40) capture un côté différent d'un plan radial à l'axe de palier et situé entre les capteurs (38, 40),
une broche creuse (28) qui est disposée sur le bâti (2) de façon coaxiale à l'axe de palier, le dispositif de mesure (37) étant monté avec le support (36) sur la broche creuse (28) et étant guidé par la broche creuse (28) sur une trajectoire circulaire autour de l'axe de palier,
un entraînement en rotation (30) pouvant être commandé, par lequel la broche creuse (28) peut être entraînée dans les deux sens de rotation,
un entraînement linéaire (34) pouvant être commandé, lequel est disposé sur la broche creuse (28) et porte le dispositif de mesure (37), et au moyen duquel le dispositif de mesure (37) peut être déplacé tangentiellement à l'axe de palier,
un dispositif de commande électrique pour commander l'entraînement rotatif (30) et l'entraînement linéaire (34), et
un ordinateur avec une mémoire de données et un dispositif d'évaluation pour mémoriser et évaluer les données de position mesurées au moyen du dispositif de mesure.

8. Dispositif selon la revendication 7, **caractérisé en ce que** la broche creuse (28), le support (36) et le dispositif de mesure (37) peuvent être déplacés conjointement par rapport au bâti (2) dans la direction de l'axe de palier par un entraînement linéaire supplémentaire (24) pouvant être commandé.

9. Dispositif selon l'une des revendications 7 ou 8, **caractérisé par** des systèmes de mesure de déplacement indépendants qui sont configurés pour mesurer des positions et/ou des déplacements du dispositif de mesure (37) par rapport au bâti (2).

10. Dispositif selon l'une des revendications 7 à 9, **caractérisé en ce que** la broche creuse (28) et l'entraînement en rotation (30) qui l'entraîne sont disposés sur un socle de palier (26) qui est fixé sur un premier chariot (22) et qui est guidé en déplacement en direction de l'axe de palier au moyen du chariot (22) sur des rails de guidage (4) dans le bâti (2).

11. Dispositif selon l'une des revendications 7 à 10, **caractérisé par** un dispositif d'alignement (44) pouvant être commandé qui est conçu pour aligner une pièce reçue dans les éléments de palier (18, 20) dans une position axiale et dans une position angulaire.

12. Dispositif selon la revendication 11, **caractérisé en ce que** le dispositif d'alignement (44) est disposé sur un deuxième chariot (46) et peut être déplacé avec celui-ci dans le bâti (2) d'une position de repos située en dehors de la plage de déplacement du dispositif de mesure (37) à une position d'alignement en dessous de l'axe de palier.

13. Dispositif selon l'une des revendications 11 ou 12, **caractérisé en ce que** le dispositif d'alignement (44) comporte une tête d'alignement (50) qui peut être déplacée vers le haut en direction de l'axe de palier pour aligner la pièce, et qui est munie de pinces (52) pouvant être actionnées de façon pneumatique pour saisir la pièce.

14. Dispositif selon l'une des revendications 11 à 13, **caractérisé en ce qu'**un troisième entraînement linéaire (48) pouvant être commandé est disposé sur le bâti (2) pour déplacer le dispositif d'alignement (44) de la position de repos à une position d'alignement.
